# EUROPEAN PATENT SPECIFICATION

(11) **EP 3 035 175 B1**
(45) Date of publication and mention of the grant of the patent: **27.06.2018**
(21) Application number: 13881390.2
(22) Date of filing: 09.10.2013
(51) Int. Cl.: G06F 3/048, G06F 3/041, G06F 3/0488

(54) **SCREEN EDGE TOUCH CONTROL OPTIMIZATION METHOD, DEVICE AND TERMINAL**
VERFAHREN, VORRICHTUNG UND ENDGERÄT ZUR OPTIMIERUNG DER BILDSCHIRMKANTENBERÜHRUNGSSTEUERUNG
PROCÉDÉ, DISPOSITIF ET TERMINAL D'OPTIMISATION DE COMMANDE TACTILE DE BORD D'ÉCRAN

(30) Priority: 16.08.2013 CN 201310360330
(43) Date of publication of application: 22.06.2016
(73) Proprietor: ZTE Corporation, Shenzhen, Guangdong 518057 (CN)
(72) Inventor: LEI, Jian, Shenzhen Guangdong 518057 (CN)
(74) Representative: Brevalex
(86) International application number: PCT/CN2013/084893
(87) International publication number: WO 2014/161287

(56) References cited:
- EP-A1- 2 763 005
- EP-A1- 2 851 766
- CN-A- 102 289 321
- CN-A- 103 176 653
- CN-A- 103 235 695
- CN-A- 103 376 931
- CN-A- 103 631 443
- US-A1- 2012 011 438
- US-A1- 2013 088 445

## Description

### TECHNICAL FIELD

The present disclosure relates to screen touch control technology, more particularly, to a screen edge touch control optimization method, device and a terminal.

### BACKGROUND

Large screen terminals supporting multipoint touch control have become very popular with the rapid development of touch screen technology and touch screen terminals larger than 6 inches have emerged. In order to minimize size of a terminal and maintain large screen at the same time, the terminal are generally designed with a narrow border. At present, it has been shown by available data that the narrowest border of a terminal is only 2.4 millimeters wide.

In the related art, although good visual experience has been brought to a user by using the technology for a terminal with a large screen and a narrow border, a new problem is also caused for a touch control operation of the user. Since the border of the terminal is extremely narrow, the roots of a finger and a thumb holding the terminal will inevitably touch an edge part of the screen when the user uses the terminal, thus causing misoperation. If a touch control event corresponding to the touch on the screen edge of the terminal is reported, a touch control operation on another region is not responded, thereby seriously affecting user experience.

The document US 2013/0088445A1 discloses a method for controlling a touchscreen of a portable terminal, which includes detecting a start signal and deactivating an edge region of the touchscreen in response to the start signal.

The document EP 2763005A1 discloses a touch operation control method to avoid false detection of an unintended touch operation of a user by limiting touch operation detection at the edges of a touch panel that is included in a portable information terminal depending on a usage state.

The document EP 2851766A1 discloses a method for preventing the misoperation of a touchscreen, a touchscreen and a mobile terminal; the method includes: when it is detected that a touch point exists in a display region on a touchscreen, determining whether the touch point is located in a set invalid touch region; and if it is determined that the touch point is located in the invalid touch region, not responding to the touch point; by way of not responding to a touch point when it is determined that the touch point is located in an invalid touch region, the present invention can avoid the problem that a corresponding function is triggered mistakenly when a user touches the invalid touch region, improving the accuracy degree and validity of the touch effect of a touchscreen.

The document US 2012/011438 A1 discloses a mobile terminal, including: a housing including a front side, a rear side and a plurality of lateral sides; a touch-screen located on the front side of the housing, configured to display at least one touch-executable object, and including a predefined edge region; and a controller. The controller is configured to pre-empt execution of a function corresponding to a particular object of the at least one touch-executable object if a first touch of the particular object is detected in the predefined edge region of the touchscreen.

### SUMMARY

In view of this, the major purpose of embodiments of the present disclosure is to provide a screen edge touch control optimization method, a device and a terminal, so that misoperation caused by touching an edge of a screen can be effectively avoided, and user experience is improved while good visual experience is brought to the user.

In order to achieve the purpose above, the technical solutions of the embodiments of the present disclosure are implemented as follows.

An embodiment of the present disclosure provides a screen edge touch control optimization method, including that an application that needs to perform screen edge touch control optimization processing, a screen edge touch control optimization region corresponding to the application and an association between the application and the screen edge touch control optimization region are pre-set, and when it is determined that an application activated currently is the application that needs to perform the screen edge touch control optimization processing, further determining whether a touch point detected currently is located in the screen edge touch control optimization region corresponding to the application, if yes, a touch control event corresponding to the detected touch point is prohibited from being reported to an application layer; wherein, different applications are set to correspond to different screen edge touch control optimization regions with different areas.

Preferably, before it is determined that the touch point detected currently is located in the screen edge touch control optimization region, the screen edge touch control optimization method further includes that it is determined that a screen edge touch control optimization function is turned on.

Preferably, the operation that the screen edge touch control optimization region is set includes that more than one region with different areas is set in the screen as the touch control optimization regions.

Preferably, the screen edge touch control optimization method further includes that, when it is determined that the application activated currently is not the preset application that needs to use the screen edge touch control optimization function, the touch control event corresponding to the detected touch point is reported to the application layer to be processed.

An embodiment of the present disclosure further provides a screen edge touch control optimization device, including: a touch control optimization function setting unit and a touch control optimization execution unit, wherein
the touch control optimization function setting unit is configured to pre-set an application that needs to perform screen edge touch control optimization processing, a screen edge touch control optimization region corresponding to the application and an association between the application and the screen edge touch control optimization region; and
the touch control optimization execution unit is configured to, when it is determined that an application activated currently is the application that needs to perform the screen edge touch control optimization processing and a touch point detected currently is located in the screen edge touch control optimization region corresponding to the application, prohibit a touch control event corresponding to the detected touch point from being reported to an application layer; wherein, different applications are set to correspond to different screen edge touch control optimization regions with different areas.

Preferably, the touch control optimization function setting unit is further configured to set more than one region with different areas in the screen as the touch control optimization regions.

Preferably, the touch control optimization function setting unit is further configured to trigger the touch control optimization execution unit when it is determined that a screen edge touch control optimization function is turned on.

Preferably, the touch control optimization execution unit is further configured to, when it is determined that an application activated currently is not the preset application that needs to use the screen edge touch control optimization function, report the touch control event corresponding to the detected touch point to the application layer to be processed.

Preferably, the touch control optimization function setting unit includes:
a touch control optimization function setting sub-unit, configured to set whether to turn on the screen edge touch control optimization function;
a touch control optimization region setting sub-unit, configured to set the screen edge touch control optimization region; and
a touch control optimization application setting sub-unit, configured to set the application that needs to perform the screen edge touch control optimization processing.

An embodiment of the present disclosure further provides a terminal, including the abovementioned screen edge touch control optimization device.

According to the screen edge touch control optimization method, device and terminal provided by the embodiments of the present disclosure, a screen edge touch control optimization region is set; when a touch point is detected, it is determined whether the detected point is located in the screen edge touch control optimization region, and if so, a touch control event corresponding to the detected touch point is prohibited from being reported to an application layer. In this way, misoperation caused by touching an edge of a screen can be effectively avoided, and user experience is improved while good visual experience is brought to the user.

### BRIEF DESCRIPTION OF THE DRAWINGS

Fig. 1 is a basic flowchart showing a screen edge touch control optimization method according to an embodiment of the present disclosure;
Fig. 2 is a detailed implementation flowchart showing a screen edge touch control optimization method according to an embodiment of the present disclosure;
Fig. 3a is the first schematic diagram illustrating the application effect of a screen edge touch control optimization method according to an embodiment of the present disclosure;
Fig. 3b is the second schematic diagram illustrating the application effect of a screen edge touch control optimization method according to an embodiment of the present disclosure;
Fig. 4 is a structural diagram of a screen edge touch control optimization device according to an embodiment of the present disclosure; and
Fig. 5 is a structural diagram of a touch control optimization function setting unit in a screen edge touch control optimization device according to an embodiment of the present disclosure.

### DETAILED DESCRIPTION

The basic idea of the embodiments of the present disclosure is that a screen edge touch control optimization region is set, it is determined whether a touch point detected currently is located in the screen edge touch control optimization region, and if so, a corresponding touch control event is not reported to an application layer.

Preferably, a switch for a screen edge touch control optimization function may be preset in the embodiments of the present disclosure. The screen edge touch control optimization function is turned on if necessary or before a screen touch point is detected. Accordingly, when it is determined whether the touch point detected currently is located in the screen edge touch control optimization region, it is determined whether the screen edge touch control optimization function has been turned on, and if so, processing of screen edge touch control optimization is performed.

Preferably, an application that needs to perform the processing of the screen edge touch control optimization may be preset in the embodiments of the present disclosure. Accordingly, when the screen touch point is detected, it is determined whether a current application is the application that needs to perform the processing of the screen edge touch control optimization, if so, the processing of the screen edge touch control optimization is performed, and otherwise, the processing of the screen edge touch control optimization is not performed.

It should be noted that a terminal described in the embodiments of the present disclosure is not merely limited to a smart phone, or a Personal Digital Assistant (PDA), but also includes players such as a Moving Picture experts group audio player 3 (MP3) and so on. In a word, all touch screen terminals capable of executing a screen edge touch control optimization method of the present disclosure should belong to terminals claimed in the present disclosure.

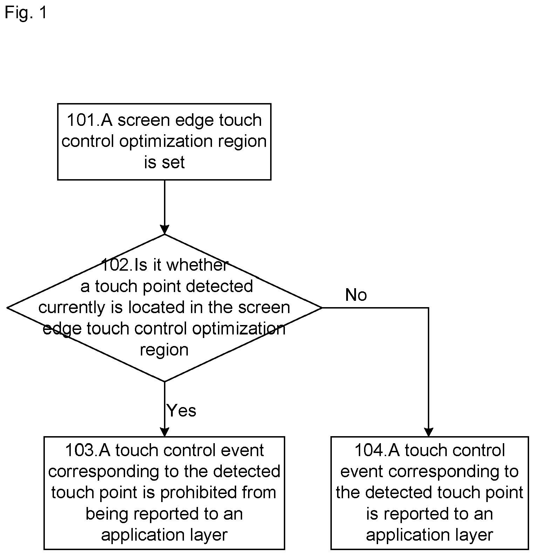

Fig. 1 shows a basic flowchart showing a screen edge touch control optimization method according to an embodiment of the present disclosure, including the following steps.

Step 101: A screen edge touch control optimization region is set.

Here, the operation that the screen edge touch control optimization region is set includes that more than one region with different areas is set as the touch control optimization region, wherein only one or two touch control optimization regions may be set as required, or more than two touch control optimization regions may be set. If a plurality of touch control optimization regions is set, the area of each touch control optimization region may be set as required in practice.

Step 102 to Step 104: It is determined whether a touch point detected currently is located in the screen edge touch control optimization region, if so, Step 103 is performed, and otherwise, Step 104 is performed.

Step 103: A touch control event corresponding to the detected touch point is prohibited from being reported to an application layer.

Step 104: A touch control event corresponding to the detected touch point reported to an application layer.

As a preferred embodiment, it is further determined that a screen edge touch control optimization function has been turned on before Step 102.

Here, the operation that the touch control event corresponding to the detected touch point is prohibited from being reported to the application layer may be implemented by means of performing optimized filtering to the touch control event. Processing performed after the touch control event is reported to the application layer is the same as that in the related art, and will not be described repeatedly here.

In a preferred embodiment, Step 101 further includes that a switch for the screen edge touch control optimization function is set. Accordingly, before whether the touch point detected currently is located in the screen edge touch control optimization region is determined, it is determined that the screen edge touch control optimization function has been turned on in Step 102.

In a preferred embodiment, Step 101 further includes that an application that needs to perform screen edge touch control optimization processing is set. Accordingly, it is determined whether a current application is the application that needs to perform the screen edge touch control optimization processing after the screen touch point is detected in Step 102, if so, Step 102 to Step 104 are performed, and otherwise, subsequent processing is performed according to the related art.

The technical solutions of the present disclosure will be further expounded below with reference to the accompanying drawings and specific embodiments.

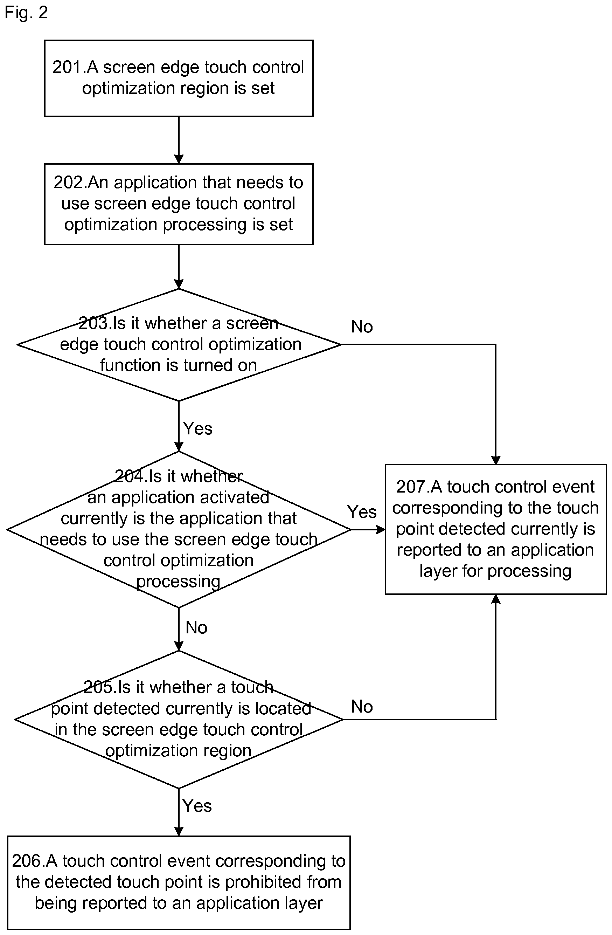

Fig. 2 is a detailed implementation flowchart showing a screen edge touch control optimization method according to an embodiment of the present disclosure, including the following steps.

Step 201: A screen edge touch control optimization region is set.

In this step, the screen edge touch control optimization region is a region for optimizing filtering to a touch control event. One or two touch control optimization regions may be set as required, or more than two touch control optimization regions may be set. If a plurality of touch control optimization regions is set, the area of each touch control optimization region may be set as required in practice.

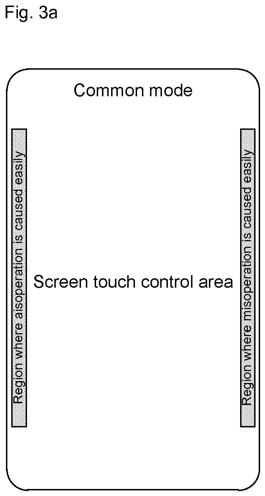

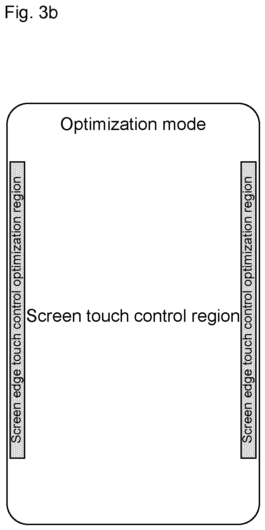

Here, an example of setting a screen edge region as a screen edge touch control optimization region is as shown in Fig. 3a and Fig. 3b. Regions as shown in Fig. 3a, where misoperation is caused easily at the leftmost side and the rightmost side of a screen, are set as screen edge touch control optimization regions as shown in Fig. 3b. In practical application, filtering to touch control events in the screen edge touch control optimization regions as shown in Fig. 3b may be optimized to effectively avoid misoperation.

Step 202: An application that needs to perform screen edge touch control optimization processing is set.

Here, since a touch control event of a full screen region needs to be processed when using some applications including gaming, drawing and so on, such applications are not set as applications that need to perform the screen edge touch control optimization processing. When a screen edge touch control optimization function is turned on, all touch control events corresponding to an application that does not need to use the screen edge touch control optimization function are reported to an application layer to be processed. In other words, it is unnecessary to filter the touch control events in an optimized manner.

As a preferred embodiment, touch control optimization regions are further set corresponding to different applications, and associations between the applications and the touch control optimization regions are set. Touch control optimization regions for different applications may be different.

Step 203: It is determined whether a screen edge touch control optimization function has been turned on, if so, Step 204 is performed, and otherwise, Step 207 is performed.

In this step, it is set according to an instruction from a user that the screen edge touch control optimization function is turned on when it is necessary to perform the screen edge touch control optimization processing, and it is set according to an instruction from the user that the screen edge touch control optimization function is turned off when it is unnecessary to perform the screen edge touch control optimization processing, wherein the screen edge touch control optimization function may be turned on or turned off at any moment according to an instruction from a terminal user.

Step 204: It is determined whether an application activated currently is the application that needs to use the screen edge touch control optimization processing, if so, Step 207 is performed, and otherwise, Step 205 is performed.

In this step, a touch control event in a full screen region is reported to an application layer to be processed without being filtered in an optimized manner when the current application is an application that does not need to use the screen edge touch control optimization processing.

When the current application is the application that needs to use the screen edge touch control optimization function, a touch control event in the screen edge touch control optimization region is filtered in an optimized manner subsequently.

Step 205: It is determined whether a touch point detected currently is located in the screen edge touch control optimization region, if yes, Step 206 is performed, and otherwise, Step 207 is performed.

Step 206: A touch control event corresponding to the detected touch point is prohibited from being reported to an application layer.

Step 206 includes that a touch control event in the screen edge touch control optimization region is filtered in an optimized manner according to the screen edge touch control optimization region set by a user, that is, the touch control event is not reported to an application layer.

Step 207: A touch control event corresponding to the touch point detected currently is reported to an application layer to be processed.

That it, instead of being filtered in an optimized manner, the touch control event is subjected to a subsequent operation according to the related art.

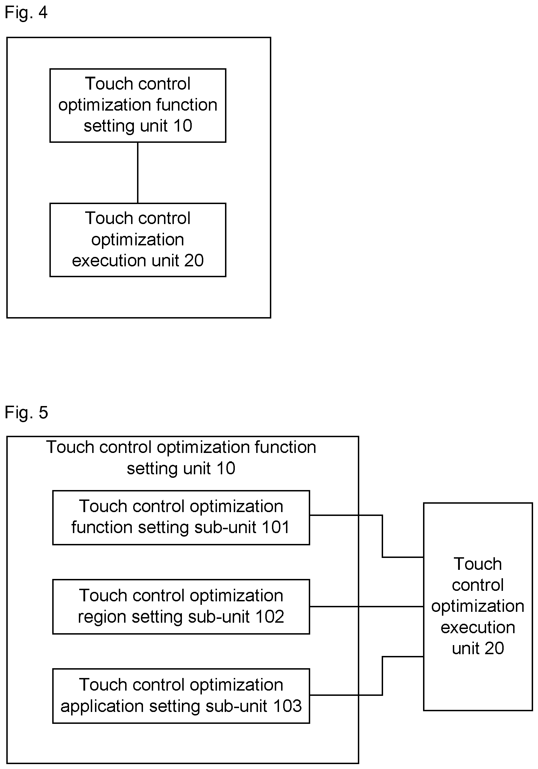

An embodiment of the present disclosure further provides a screen edge touch control optimization device so as to implement the screen edge touch control optimization method above. The screen edge touch control optimization device, which is arranged in a terminal, is a new screen edge touch control optimization functional module of the mobile terminal. Fig. 4 shows a structure of the screen edge touch control optimization device. The device includes:
a touch control optimization function setting unit 10, configured to set a screen edge touch control optimization region; and
a touch control optimization execution unit 20 configured to, when it is determined that a touch point detected currently is located in the screen edge touch control optimization region, prohibit a touch control event corresponding to the detected touch point from being reported to an application layer.

In this embodiment, the touch control optimization function setting unit 10 may set only one or two touch control optimization regions as required, or set more touch control optimization regions. If a plurality of touch control optimization regions is set, the area of each touch control optimization region may be set as required in practice.

In this embodiment, the touch control optimization function setting unit 10 is further configured to set more than one region with different areas in the screen as the touch control optimization regions.

In this embodiment, the touch control optimization function setting unit 10 is further configured to trigger the touch control optimization execution unit 20 when it is determined that a screen edge touch control optimization function is turned on.

In this embodiment, the touch control optimization function setting unit 10 is further configured to set an application that needs to perform screen edge touch control optimization processing.

The touch control optimization execution unit 20 is further configured to, when it is determined that the touch point detected currently is located in the screen edge touch control optimization region, determine that a current application is the application that needs to perform the screen edge touch control optimization processing.

The touch control optimization execution unit 20 is further configured to, when it is determined that an application activated currently is an application that does not need to use the screen edge touch control optimization processing, report the touch control event corresponding to the touch point detected currently to the application layer to be processed.

The touch control optimization execution unit 20 is further configured to, when it is determined that the application activated currently is the application that needs to use the screen edge touch control optimization processing, perform, according to the screen edge touch control optimization region set by the touch control optimization function setting unit 10, optimized filtering to a touch control event corresponding to a touch point detected in the screen edge touch control optimization region, i.e. the touch control event is not reported to an application layer.

Fig. 5 is a structural diagram illustrating the touch control optimization function setting unit 10 in an embodiment of the present disclosure, including: a touch control optimization function setting sub-unit 101, a touch control optimization region setting sub-unit 102 and a touch control optimization application setting sub-unit 103.

The touch control optimization function setting sub-unit 101 is configured to set whether to turn on the screen edge touch control optimization function.

When a user of the terminal needs to perform screen edge touch control optimization, the touch control optimization function setting sub-unit 101 sets, according to an instruction from the user, to turn on the screen edge touch control optimization function, and when the user of the terminal does not need to perform the screen edge touch control optimization, the touch control optimization function setting sub-unit 101 sets, according to an instruction from the user, to turn off the screen edge touch control optimization function. The touch control optimization function setting sub-unit 101 may further turn on or turn off the screen edge touch control optimization function at any time according to an instruction from the user of the terminal.

The touch control optimization region setting sub-unit 102 is configured to set the screen edge touch control optimization region.

Here, the screen edge touch control optimization region is a region for optimizing filtering to a touch control event. Only one or two touch control optimization regions may be set as required, or more touch control optimization regions may be set. If a plurality of touch control optimization regions is set, the area of each touch control optimization region is different may be set as required in practice.

The touch control optimization application setting sub-unit 103 is configured to set the application that needs to perform the screen edge touch control optimization processing.

Here, since a touch control event of a full screen region needs to be processed when using some applications including gaming, drawing and so on, it is unnecessary to set such applications as applications that need to use the screen edge touch control optimization function. When the screen edge touch control optimization function is turned on, all touch control events corresponding to an application that does not need to use the screen edge touch control optimization function are reported to an application layer to be processed. In other words, the touch control optimization execution unit 20 does not filter the touch control events in an optimized manner.

It should be noted that information set by the touch control optimization function setting sub-unit 101, the touch control optimization region setting sub-unit 102 and the touch control optimization application setting sub-unit 103 may be stored in a memory of the terminal. In practice, both the touch control optimization function setting unit 10 and the touch control optimization execution unit 20 may be implemented by a Central Processing Unit (CPU), a Digital Signal Processor (DSP) or a Field Programmable Gate Array (FPGA) in the terminal.

The foregoing are only preferred embodiments of the present disclosure, but are not intended to limit the protection scope of the present disclosure.

## Claims

1. A screen edge touch control optimization method, comprising:
pre-setting (201, 202) an application that needs to perform screen edge touch control optimization processing, a screen edge touch control optimization region corresponding to the application and an association between the application and the screen edge touch control optimization region; and
when it is determined (204) that an application activated currently is the application that needs to perform the screen edge touch control optimization processing, further determining (205) whether a touch point detected currently is located in the screen edge touch control optimization region corresponding to the application, if yes, prohibiting (206) a touch control event corresponding to the detected touch point from being reported to an application layer;
wherein, different applications are pre-set to correspond to different screen edge touch control optimization regions with different areas.

2. The screen edge touch control optimization method according to claim 1, further comprising: before it is determined that the touch point detected currently is located in the screen edge touch control optimization region, determining that a screen edge touch control optimization function is turned on.

3. The screen edge touch control optimization method according to claim 1, wherein the step of setting the screen edge touch control optimization region comprises: setting more than one region with different areas in the screen as touch control optimization regions.

4. The screen edge touch control optimization method according to claim 1, further comprising: when it is determined that the application activated currently is not the preset application that needs to use the screen edge touch control optimization function, reporting the touch control event corresponding to the detected touch point to the application layer to be processed.

5. A screen edge touch control optimization device, the device comprising: a touch control optimization function setting unit (10) and a touch control optimization execution unit (20), wherein
the touch control optimization function setting unit (10) is configured to pre-set an application that needs to perform screen edge touch control optimization processing, a screen edge touch control optimization region corresponding to the application and an association between the application and the screen edge touch control optimization region; and
the touch control optimization execution unit (20) is configured to, when it is determined that an application activated currently is the application that needs to perform the screen edge touch control optimization processing and a touch point detected currently is located in the screen edge touch control optimization region corresponding to the application, prohibit a touch control event corresponding to the detected touch point from being reported to an application layer;
wherein, different applications are set to correspond to different screen edge touch control optimization regions with different areas.

6. The screen edge touch control optimization device according to claim 5, wherein the touch control optimization function setting unit (10) is further configured to set more than one region with different areas in the screen as touch control optimization regions.

7. The screen edge touch control optimization device according to claim 5, wherein the touch control optimization function setting unit (10) is further configured to trigger the touch control optimization execution unit (20) when it is determined that a screen edge touch control optimization function is turned on.

8. The screen edge touch control optimization device according to claim 5, wherein
the touch control optimization execution unit (20) is further configured to, when it is determined that an application activated currently is not a preset application that needs to use screen edge touch control optimization function, report the touch control event corresponding to the detected touch point to the application layer to be processed.

9. The screen edge touch control optimization device according to claim 5, wherein the touch control optimization function setting unit (10) comprises:
a touch control optimization function setting sub-unit (101), configured to set whether to turn on a screen edge touch control optimization function;
a touch control optimization region setting sub-unit (102), configured to set the screen edge touch control optimization region; and
a touch control optimization application setting sub-unit (103), configured to set an application that needs to perform screen edge touch control optimization processing.

10. A terminal, comprising the screen edge touch control optimization device according to any one of claims 5 to 9.

## Patentansprüche

1. Verfahren zur Optimierung der Bildschirmkanten-Berührungssteuerung, umfassend folgende Schritte: Voreinstellen (201, 201) einer Anwendung, die die Durchführung der Bildschirmkanten-Berührungssteuerungs-Optimierung erfordert sowie eines Bildschirmkanten-Berührungssteuerungs-Optimierungsbereiches, der der Anwendung entspricht und einer Verbindung zwischen der Anwendung und dem Bildschirmkanten-Berührungssteuerungs-Optimierungsbereich, und dann, wenn festgestellt wird (204), daß eine gerade aktivierte Anwendung die Anwendung ist, die die Durchführung der Bildschirmkanten-Berührungssteuer-Optimierung erfordert, weiteres Feststellen (205), ob ein gerade ermittelter Berührungspunkt in dem Bildschirmkanten-Berührungssteuer-Optimierungsbereich liegt, der der Anwendung entspricht, und falls ja, Verhindern (206), daß ein Berührungssteuer-Ereignis entsprechend dem ermittelten Berührungspunkt an eine Anwendungsschicht gemeldet wird, wobei unterschiedliche Anwendungen voreingestellt werden, um unterschiedlichen Bildschirmkanten-Berührungssteuerungs-Optimierungsbereichen mit unterschiedlichen Zonen zu entsprechen.

2. Verfahren zur Optimierung der Bildschirmkanten-Berührungssteuerung nach Anspruch 1, weiter **dadurch gekennzeichnet, daß** bevor festgestellt wird, daß der gerade ermittelte Berührungspunkt in dem Bildschirmkanten-Berührungssteuer-Optimierungsbereich liegt, festzustellen ist, daß eine Bildschirmkanten-Berührungssteuer-Optimierungsfunktion eingeschaltet ist.

3. Verfahren zur Optimierung der Bildschirmkanten-Berührungssteuerung nach Anspruch 1, **dadurch gekennzeichnet, daß** der Schritt der Einstellung des Bildschirmkanten-Berührungssteuer-Optimierungsbereiches umfaßt: Einstellen von mehr als einem Bereich mit unterschiedlichen Zonen in dem Bildschirm sowie die Berührungssteuer-Optimierungsbereiche.

4. Verfahren zur Optimierung der Bildschirmkanten-Berührungssteuerung nach Anspruch 1, ferner **dadurch gekennzeichnet, daß** dann, wenn festgestellt wird, daß die gerade aktivierte Anwendung nicht die voreingestellte Anwendung ist, die benötigt wird, um die Bildschirmkanten-Berührungssteuer-Optimierungsfunktion zu benutzen, Melden des Berührungssteuerereignisses entsprechend dem festgestellten Berührungspunkt an die zu bearbeitende Anwendungsschicht.

5. Bildschirmkanten-Berührungssteuer-Optimierungsvorrichtung, umfassend eine Berührungssteuer-Optimierungsfunktion-Einstelleinheit (10) und eine Berührungssteuer-Optimierungsausführungseinheit (20), **dadurch gekennzeichnet, daß** die Berührungssteuer-Optimierungsfunktion-Einstelleinheit (10) so gebaut ist, daß eine Anwendung voreingestellt wird, die benötigt wird, um den Bildschirmkanten-Berührungssteuer-Optimierungsprozeß zu betreiben, mit einem Bildschirmkanten-Berührungssteuer-Optimierungsbereich entsprechend der Anwendung und einer Verbindung zwischen der Anwendung und dem Bildschirmkanten-Berührungssteuer-Optimierungsbereich; und daß die Berührungssteuer-Optimierungs-Ausführungseinheit (20) so gebaut ist, daß dann, wenn festgestellt wird, daß eine gerade aktivierte Anwendung die Anwendung ist, die benötigt wird, um das Bildschirmkanten-Berührungssteuer-Optimierungsverfahren durchzuführen, und ein gerade festgestellter Berührungspunkt in dem Bildschirmkanten-Berührungssteuer-Optimierungsbereich liegt, der der Anwendung entspricht, verhindert wird, daß ein Berührungssteuer-Ereignis, das dem festgestellten Berührungspunkt entspricht, an eine Anwendungsschicht gemeldet wird; wobei unterschiedliche Anwendungen eingestellt werden, um unterschiedlichen Bildschirmkanten-Berührungssteuer-Optimierungsbereichen mit unterschiedlichen Zonen zu entsprechen.

6. Bildschirmkanten-Berührungssteuer-Optimierungsvorrichtung nach Anspruch 5, **dadurch gekennzeichnet, daß** die Berührungssteuer-Optimierungsfunktions-Einstelleinheit (10) weiter **dadurch gekennzeichnet ist, daß** mehr als ein Bereich mit unterschiedlichen Zonen in dem Bildschirm als Berührungssteuer-Optimierungsbereich einzustellen ist.

7. Bildschirmkanten-Berührungssteuer-Optimierungsvorrichtung nach Anspruch 5, **dadurch gekennzeichnet, daß** die Berührungssteuer-Optimierungsfunktion-Einstelleinheit (10) ferner so gebaut ist, daß die Berührungssteuer-Optimierungsausführungseinheit (20) geschaltet wird, sobald festgestellt ist, daß eine Bildschirmkanten-Berührungssteuer-Optimierungsfunktion eingeschaltet ist.

8. Bildschirmkanten-Berührungssteuer-Optimierungsvorrichtung nach Anspruch 5, **dadurch gekennzeichnet, daß** die Berührungssteuer-Optimierungs-Ausführungseinheit (20) ferner so gebaut ist, daß dann, wenn festgestellt wird, daß eine gerade aktivierte Anwendung keine voreingestellte Anwendung ist, die benötigt wird, um die Bildschirmkanten-Berührungssteuer-Optimierungsfunktion zu benutzen, das Berührungssteuer-Ereignis entsprechend dem festgestellten Berührungspunkt an die zu bearbeitende Anwendungsschicht gemeldet wird.

9. Bildschirmkanten-Berührungssteuer-Optimierungsvorrichtung nach Anspruch 5, **dadurch gekennzeichnet, daß** die Berührungssteuer-Optimierungsfunktion-Einstelleinheit (10) folgendes aufweist: eine Berührungssteuer-Optimierungsfunktion-Einstelluntereinheit (101), die gebaut ist, um festzustellen, ob eine Bildschirmkanten-Berührungssteuer-Optimierungsfunktion eingeschaltet wird; eine Berührungssteuer-Optimierungsbereich-Einstelluntereinheit (102), die gebaut ist, um den Bildschirmkanten-Berührungssteuer-Optimierungsbereich einzustellen; und eine Berührungssteuer-Optimierungs-Anwendungs-Einstelluntereinheit (103), die gebaut ist, um eine Anwendung, die benötigt wird, um den Bildschirmkanten-Berührungssteuer-Optimierungsprozeß einzustellen.

10. Endgerät, das die Bildschirmkanten-Berührungssteuer-Optimierungsvorrichtung gemäß einem der Ansprüche 5 bis 9 aufweist.

## Revendications

1. Procédé d'optimisation de commande à effleurement de bord d'écran, comprenant :
le préréglage (201, 202) d'une application qui doit réaliser un traitement d'optimisation de commande à effleurement de bord d'écran, une région d'optimisation de commande à effleurement de bord d'écran correspondant à l'application et une association entre l'application et la région d'optimisation de commande à effleurement de bord d'écran ; et
lorsqu'on détermine (204) qu'une application actuellement activée est l'application qui doit réaliser le traitement d'optimisation de commande à effleurement de bord d'écran, le fait de déterminer en outre (205) si un point d'effleurement actuellement détecté est situé dans la région d'optimisation de commande à effleurement de bord d'écran correspondant à l'application, si oui, le fait d'empêcher (20) le signalement d'un événement de commande à effleurement correspondant au point d'effleurement détecté à une couche d'application ;
dans lequel, des applications différentes sont préréglées pour correspondre à des régions d'optimisation de commande à effleurement de bord d'écran différentes avec des zones différentes.

2. Procédé d'optimisation de commande à effleurement de bord d'écran selon la revendication 1, comprenant en outre : avant qu'on détermine que le point d'effleurement actuellement détecté est situé dans la région d'optimisation de commande à effleurement de bord d'écran, la détermination qu'une fonction d'optimisation de commande à effleurement de bord d'écran est mise en marche.

3. Procédé d'optimisation de commande à effleurement de bord d'écran selon la revendication 1, dans lequel l'étape de réglage de la région d'optimisation de commande à effleurement de bord d'écran comprend : le réglage de plus d'une région avec des zones différentes dans l'écran en tant que régions d'optimisation de commande à effleurement.

4. Procédé d'optimisation de commande à effleurement de bord d'écran selon la revendication 1, comprenant en outre : lorsqu'on détermine que l'application actuellement activée n'est pas l'application préréglée qui doit utiliser la fonction d'optimisation de commande à effleurement de bord d'écran, le signalement de l'évènement de commande à effleurement correspondant au point d'effleurement détecté à la couche d'application à traiter.

5. Dispositif d'optimisation de commande à effleurement de bord d'écran, le dispositif comprenant : une unité de réglage de fonction d'optimisation de commande à effleurement (10) et une unité d'exécution d'optimisation de commande à effleurement (20), dans lequel
l'unité de réglage de fonction d'optimisation de commande à effleurement (10) est configurée pour prérégler une application qui doit réaliser un traitement d'optimisation de commande à effleurement de bord d'écran, une région d'optimisation de commande à effleurement de bord d'écran correspondant à l'application et une association entre l'application et la région d'optimisation de commande à effleurement de bord d'écran ; et
l'unité d'exécution d'optimisation de commande à effleurement (20) est configurée, lorsqu'on détermine qu'une application actuellement activée est l'application qui doit réaliser le traitement d'optimisation de commande à effleurement de bord d'écran et qu'un point d'effleurement actuellement détecté est situé dans la région d'optimisation de commande à effleurement de bord d'écran correspondant à l'application, pour empêcher le signalement d'un événement de commande à effleurement correspondant au point d'effleurement détecté à une couche d'application ;
dans lequel, des applications différentes sont réglées pour correspondre à des régions d'optimisation de commande à effleurement de bord d'écran différentes avec des zones différentes.

6. Dispositif d'optimisation de commande à effleurement de bord d'écran selon la revendication 5, dans lequel l'unité de réglage de fonction d'optimisation de commande à effleurement (10) est en outre configurée pour régler plus d'une région avec des zones différentes dans l'écran en tant que régions d'optimisation de commande à effleurement.

7. Dispositif d'optimisation de commande à effleurement de bord d'écran selon la revendication 5, dans lequel l'unité de réglage de fonction d'optimisation de commande à effleurement (10) est en outre configurée pour déclencher l'unité d'exécution d'optimisation de commande à effleurement (20) lorsqu'on détermine qu'une fonction d'optimisation de commande à effleurement de bord d'écran est mise en marche.

8. Dispositif d'optimisation de commande à effleurement de bord d'écran selon la revendication 5, dans lequel
l'unité d'exécution d'optimisation de commande à effleurement (20) est en outre configurée, lorsqu'on détermine qu'une application actuellement activée n'est pas une application préréglée qui doit utiliser une fonction d'optimisation de commande à effleurement de bord d'écran, pour signaler l'évènement de commande à effleurement correspondant au point d'effleurement détecté à la couche d'application à traiter.

9. Dispositif d'optimisation de commande à effleurement de bord d'écran selon la revendication 5, dans lequel l'unité de réglage de fonction d'optimisation de commande à effleurement (10) comprend :
une sous-unité de réglage de fonction d'optimisation de commande à effleurement (101), configurée pour régler la mise en marche ou non d'une fonction d'optimisation de commande à effleurement de bord d'écran ;
une sous-unité de réglage de région d'optimisation de commande à effleurement (102), configurée pour régler la région d'optimisation de commande à effleurement de bord d'écran ; et
une sous-unité de réglage d'application d'optimisation de commande à effleurement (103), configurée pour régler une application qui doit réaliser un traitement d'optimisation de commande à effleurement de bord d'écran.

10. Terminal, comprenant le dispositif d'optimisation de commande à effleurement de bord d'écran selon l'une quelconque des revendications 5 à 9.
